# EUROPEAN PATENT APPLICATION

(11) **EP 4 531 243 A1**
(43) Date of publication of application: **02.04.2025**
(21) Application number: 23382976.1
(22) Date of filing: 26.09.2023
(51) Int. Cl.: H02K 1/14, H02K 3/52, H02K 15/06, H02K 7/18

(54) **STATOR SEGMENTS FOR ELECTRICAL MACHINES AND METHODS FOR ASSEMBLY**

(71) Applicant: General Electric Renovables España S.L., 08005 Barcelona (ES)
(72) Inventor: MUÑIZ CASAIS, Cesar, 08005 Barcelona (ES); FIFE, W.R. Hugh, Omemee, Ontario K0L 2W0 (CA)
(74) Representative: Bardehle Pagenberg S.L.

(57) **Abstract**

The present disclosure relates to stator segments for electrical machines. The stator segments comprise a base for mounting to a stator structure, a tooth extending between a first end and a second end, wherein the tooth is mounted on the base at the first end. The stator segment further comprises a stator winding arranged around the tooth and a resilient element arranged between the stator winding and the base. The present disclosure also relates to methods for assembling stator segments.

## Description

### FIELD

The present disclosure relates to stator segments for electrical machines and to methods for assembling stator segments for electrical machines.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

Wind turbine generators, and other electrical machines such as motors, generally comprise a rotor and a stator. The rotor rotates with respect to the stator. The rotor may be the inner structure and the stator the other structure. The stator therefore may radially surround the rotor. Alternatively, in other configurations the arrangement may be opposite, with the rotor radially surrounding the stator.

Large electrical generators, as in modern wind turbines, may be permanent magnet excited generators (PMG) or electrically excited generators.

In case of permanent magnet generators (PMG), permanent magnets (PM) are generally arranged on the rotor, whereas winding elements i.e. coils are usually included in the stator. Alternatively, permanent magnets could also be arranged in the stator structure and winding elements in the rotor structure. Permanent magnet generators are generally deemed to be reliable and require less maintenance than other generator typologies.

On the other hand, electrically excited generators generally comprise a rotor having a plurality of pole shoes and excitation windings, i.e., coils. In use, a current is applied to the excitation coils. The applied current creates the polarity of the poles, wherein adjacent poles have a different magnetic polarity. As the rotor turns, the magnetic field from the pole shoes is applied to the windings of the stator causing a variable magnetic flux in the stator windings and producing a voltage in the stator windings. Thus, in electrically excited generators, the magnetic field to generate the electrical power is created electrically, and therefore permanent magnets are not required.

Electrical windings may generally be arranged in stator segments. A plurality of stator segments may be connected to a stator rim along the stator circumference. The stator segments may comprise a base configured to be fixed to stator rim and a tooth protruding from the base receiving a stator winding. A stator winding may be wound around the tooth. A stator segment may comprise a plurality of teeth and a plurality of stator windings wound around each of the teeth. Accordingly, stator windings may be mounted and unmounted to or from the stator through the stator segments. Using stator segments may facilitate the manufacturing of a stator and the replacement of malfunctioning stator or electrical windings.

In order to protect and keep the coils in place, a winding stopper (or so-called wedge) may be coupled to the respective generator tooth. It is known e.g. to use winding stoppers (or other winding retention elements) that span the space between adjacent teeth and hold the coils in between these teeth in place. However, the assembly process may be time-consuming, complicated, and cumbersome. Also, the winding stoppers have been found to affect the cooling of the coils in operation.

The present disclosure provides systems and methods to at least partially overcome some of the aforementioned drawbacks.

### SUMMARY

In an aspect of the present disclosure, a stator segment for an electrical machine is provided. The stator segment comprises a base for mounting to a stator structure and a tooth extending between a first end and a second end, wherein the tooth is mounted on the base at the first end. The stator segment further comprises a stator winding arranged around the tooth and a resilient element arranged between the stator winding and the base.

According to this aspect, the resilient element installed between the stator winding and the base may absorb radial movement of the stator winding. The stator winding may be retained more effectively against the base, reducing or eliminating a distance between the stator winding and the base and therefore providing an improved path for the magnetic flux.

Installation of the stator winding to the tooth may also be enhanced as the stator winding may be securely placed with few pieces in a relatively easy manner. In addition, since the tooth and the base are not integrally formed, different grades of electrical steel may be used in the two different parts in some examples and losses produced in the stator may be avoided or reduced.

In another aspect of the present disclosure, a method for assembling a stator segment is provided. The method comprises providing a tooth extending between a first end and a second end and arranging a stator winding around the tooth. The method further comprises arranging one or more resilient elements with a base and/or the stator winding, joining the first end of the tooth to a first end of the base retaining the stator windings at least partially by the one or more resilient elements and mounting the tooth to the base at the first end of the tooth.

In a further aspect of the disclosure, a generator is provided. The generator comprises a stator and a rotor and an air gap radially arranged between the stator and the rotor. The stator comprises a stator rim and a plurality of stator segments according to any of the examples of the aforementioned stator segment, wherein the stator segments are attached to the stator rim.

Additional objects, advantages and features of embodiments of the present disclosure will become apparent to those skilled in the art upon examination of the description, or may be learned by practice.

### BRIEF DESCRIPTION OF THE DRAWINGS

Figure 1 schematically illustrates a perspective view of one example of a wind turbine;
Figure 2 illustrates an example of a hub and a nacelle of a wind turbine;
Figure 3 schematically illustrates a perspective view of an example of a stator segment 100 for an electrical machine according to the present disclosure;
Figure 4 schematically illustrates a cross-section of the example of the stator segment 100 shown in figure 3;
Figure 5 schematically illustrates a bottom perspective view of the stator segment 100 of figures 1 and 2;
Figure 6 schematically illustrates an example of a method for assembling a stator segment 100; and
Figure 7 shows a flowchart of an example of a method for assembling a stator segment 100.

### DETAILED DESCRIPTION OF EXAMPLES

Reference now will be made in detail to embodiments of the disclosure, one or more examples of which are illustrated in the drawings. Each example is provided by way of explanation, not as a limitation. In fact, it will be apparent to those skilled in the art that various modifications and variations can be made in the present disclosure without departing from the scope or spirit of the teaching. For instance, features illustrated or described as part of one embodiment can be used with another embodiment to yield a still further embodiment. Thus, it is intended that the present disclosure covers such modifications and variations as come within the scope of the appended claims and their equivalents.

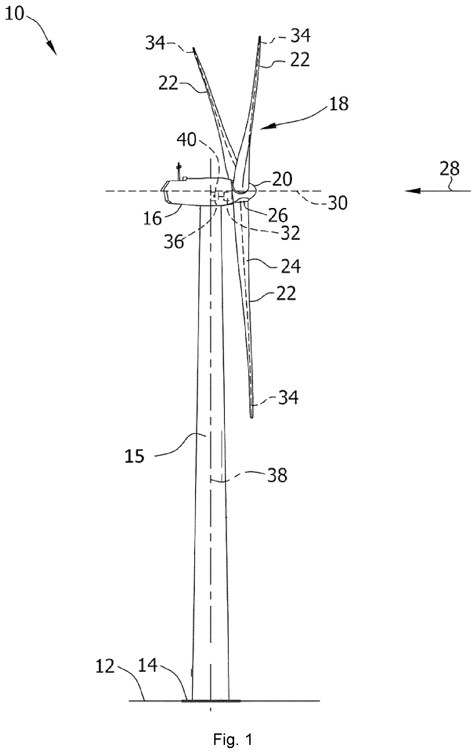

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root portion 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed system throughout the wind turbine 10, on the support system 14, within a wind farm, and/or at a remote-control center. The wind turbine controller 36 includes a processor 40 configured to perform the methods and/or steps described herein. Further, many of the other components described herein include a processor.

As used herein, the term "processor" is not limited to integrated circuits referred to in the art as a computer, but broadly refers to a controller, a microcontroller, a microcomputer, a programmable logic controller (PLC), an application specific, integrated circuit, and other programmable circuits, and these terms are used interchangeably herein. It should be understood that a processor and/or a control system can also include memory, input channels, and/or output channels.

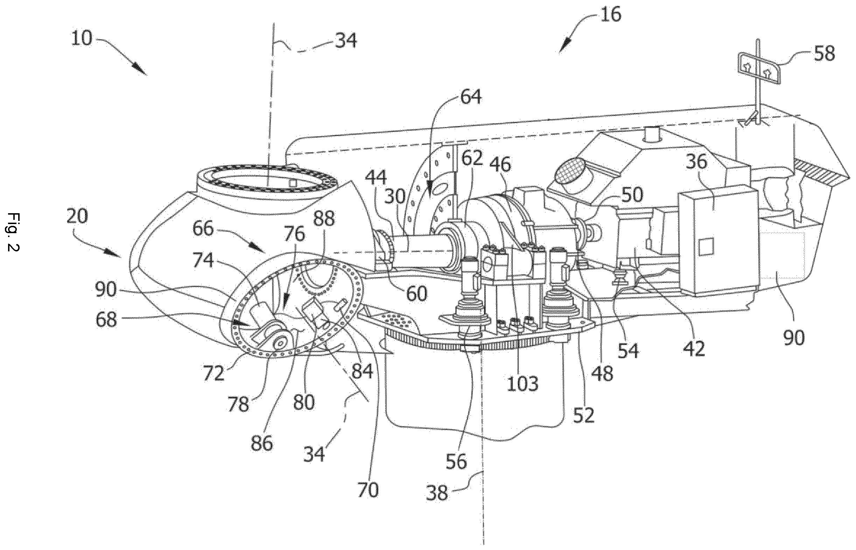

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between 400V to 1000 V into electrical energy having medium voltage, e.g. 10 - 35 KV. Said electrical energy is conducted via power cables from the nacelle 16 into the tower 15.

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, main frame 52, and forward support bearing 60 and aft support bearing 62, are sometimes referred to as a drive train 64.

In some examples, the wind turbine may be a direct drive wind turbine without gearbox 46. Generator 42 operate at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system 58 which may include a wind vane and anemometer. The meteorological measurement system 58 can provide information to the wind turbine controller 36 that may include wind direction 28 and/or wind speed. In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power generator 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the example, the pitch drive system 68, the sensor 70, the pitch control system 80, cables, and the power generator 84 are each positioned in a cavity 86 defined by an inner surface 88 of hub 20. In an alternative embodiment, said components are positioned with respect to an outer roof surface of hub 20 and may be coupled, directly or indirectly, to the outer roof surface.

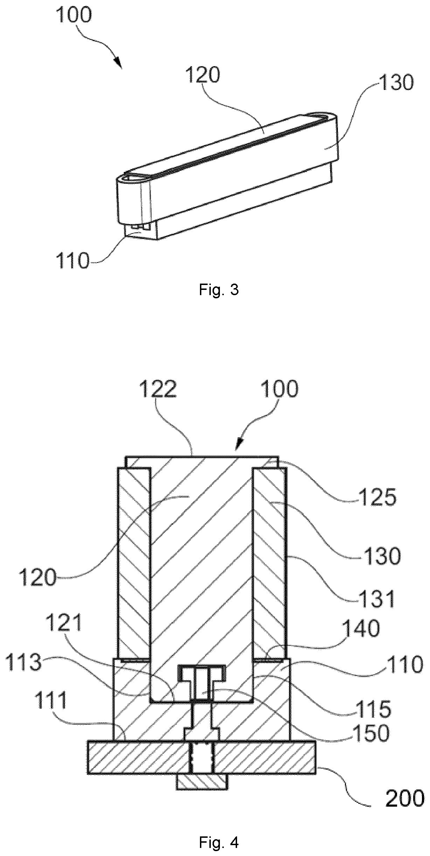

Figure 3 shows a perspective view of an example of a stator segment 100 for an electrical machine according to the present disclosure and figure 4 shows a cross-section of the example of the stator segment 100 shown in figure 3 mounted on a stator structure 200 (not shown in figure 3). In the example of figure 4, the stator structure 200 may comprise a stator rim.

As schematically shown in these figures, the stator segment 100 comprises a base 110 for mounting to a stator structure 200 and a tooth 120 extending between a first end 121 and a second end 122, wherein the tooth 120 is mounted on the base 110 at the first end 121. The stator segment 100 further comprises a stator winding 130 arranged around the tooth 120 and a resilient element 140 arranged between the stator winding 130 and the base 110.

The stator windings of the stator segment may be effectively retained using a small number of parts, providing a reduced gap between the stator winding and the base and enhancing the magnetic flux path.

As may be seen in figures 3 and 4, the base 110 and the tooth 120 are not integrally formed.

The base 110 for mounting to a stator structure 200 may comprise a substantially U-shaped cross-section and may extend along a longitudinal direction of the tooth 120. In some examples, the length of the base 110 may be substantially the same as the longitudinal length of the first end of the tooth 121. The base 110 may comprise a first base end 111 which may be configured to be mounted to a stator structure 200.

Further, the base 110 may comprise a first inner lateral base wall 113 and a second inner lateral base wall 115 which define a cavity configured to receive the first end 121 of the tooth. As shown in the example of figure 4, the first inner lateral base wall 113 and the second inner lateral base wall 115 may be parallel to each other. In other examples, the first inner lateral base wall 113 and the second inner lateral base wall 115 may comprise a different angle with respect to the first base end 111.

In addition, the base 110 may comprise a plurality of holes extending in an axial direction and configured to receive mechanical fasteners.

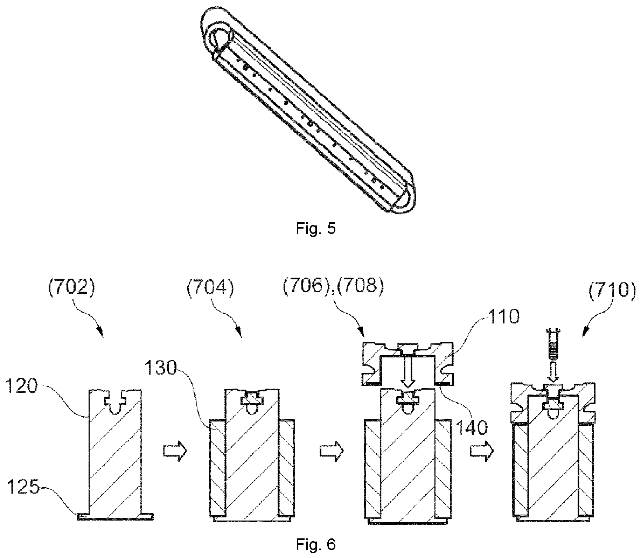

Figure 5 shows a bottom perspective view of the stator segment 100 shown in figure 3. As may be appreciated in figure 5, the base may comprise a plurality of first holes which may be used to mechanically fix the assembled stator segment 100 to the stator structure 200 e.g. with one or more bolts.

In some examples, the base 110 may comprise a plurality of second holes which may be used to mechanically fix the base 110 to a first end 121 the tooth. The stator segment 100 may comprise a base 110 with a plurality of second holes which may be aligned with a plurality of holes arranged in the tooth. That is, in these embodiments, the second holes may be used to fix and retain the tooth/teeth to the base, whereas the first holes are used to fix the assembly to the stator structure, e.g. the stator rim.

The example illustrated in figure 5 shows that the base may comprise ten holes which may be used to fix or mount the assembled stator segment 100 to the stator rim 200 and three holes which may be used to fix the tooth 120 to the base 110, and consequently, assemble the stator segment 100.

Referring back to figure 4, the tooth 120 of the stator segment 100 extends between a first end 121 and a second end 122. The tooth 120 may comprise a first lateral wall and a second lateral wall and a stator winding 130 may be arranged around the first and second lateral walls.

During operation of the electrical machine, the stator winding 130 is generally subjected to tangential and radial movements and forces and an effective retention of the stator winding 130 which is wound around the tooth 120 is important for an optimal functioning of the electrical machine.

The first and second lateral walls of the tooth 120 may comprise a protrusion 125 for retaining the stator winding 130 at or near the second end (122) of the tooth. The protrusions 125 may be integrally formed with the tooth 120 and may be substantially perpendicular to the lateral walls of the tooth 120. As shown in the example of figure 4, the protrusions 125 may extend towards an outer lateral wall 131 of the stator winding 130 e.g. along 50 - 75% of a stator winding 130 thickness. In some examples, the protrusions 125 may be located at the second end 122 of the tooth. As opposed to some prior art solutions, in this example, the protrusions are integrally formed which can reduce the risk of movement or deformation of the protrusions.

The stator winding 130 of the stator segment 100 may be effectively retained between the protrusions 125 and the resilient elements 140 and radial and tangential displacement of the stator winding 130 may be prevented.

The first end 121 of the tooth may be configured to be received within the cavity defined by the first inner lateral base wall 113 and the second inner lateral base wall 115. In some examples, the first and second lateral walls of the tooth may be parallel to each other and the first end 121 of the tooth may comprise a substantially rectangular cross-section.

In some examples, the width of the first end 121 of the tooth may be slightly larger than the distance between the first and second inner lateral base walls 113, 115. The first and second lateral walls 121, 122 of the tooth may be in contact with the first and second inner lateral base walls 113, 115 i.e. pressed against them, such that there is no gap between them and an optimal magnetic flux path is obtained. In some examples, the base may have some flexibility, e.g. a central cut, which allows the base to move slightly outwards as the tooth is inserted into the base. In some examples, the tooth may have some flexibility e.g. a central cut to be slightly compressed inwards upon insertion into the base. In further examples, both the base and the tooth may have some flexibility to facilitate assembly of the two.

In other examples, the first end 121 of the tooth may comprise a tapered shape which may fit the cavity of the base 110 defined by first and second inner lateral base walls 113, 115.

The tooth 120 may comprise one or more grooves extending substantially in an axial direction.

In some examples, the first end 121 of the tooth may be mounted to the base 110 with mechanical fasteners. The mechanical fasteners may extend from the first base end 111 to a groove of the tooth 120. In some examples, an axially extending bar 150 may be arranged within the tooth 120. The axially extending bar 150 may comprise a plurality of holes, and the stator segment 100 may be fixed to the stator structure 200 by bolts extending through the stator structure 200 and the holes in the axially extending bar 150. The same axially extending bar 150 may be used to assemble the tooth/teeth with the base in some examples.

In some examples, the axially extending bar 150 may have a T-shape in an axial cross-section. When fastening the bolts through the holes in the axially extending bar, the tooth may be pulled towards the base and an enhanced fixation between the tooth and the base may be achieved.

In some examples, the tooth 120 and the base 110 may be manufactured in different manufacturing processes, allowing the development of new patterns of industrialization of the stator segments 100.

The tooth 120 and the base 110 may be made from electrical steel e.g. silicon steel. In some examples, the same electrical steel may be used in the tooth 120 and in the base 110. In other examples, the tooth 120 and the base 110 may be made from different electrical steels.

In the electrical machine, magnetic flux in the tooth may have a different direction from the magnetic flux in the base of the stator segment. Improved performance of the electrical machine may be achieved by using an electrical steel with the orientation of the grain in the same direction as the magnetic flux. In some examples, the electrical steel from the base and the tooth may have different grain orientations.

The tooth 120 may be made from grain-oriented electrical steel oriented in the radial direction whereas the base 110 may be made from grain-oriented electrical steel oriented in the tangential direction. A stator segment with an enhanced magnetic flux path may be provided.

Further, the tooth 120 and the base 110 may be made from electrical steel laminations which may minimize power and energy loss e.g. may reduce hysteresis loss or Eddy currents.

In some examples, the tooth 120 may comprise a plurality of first laminations and the base 110 may comprise a plurality of second laminations. The plurality of first laminations may be thinner than the plurality of second laminations. In the stator segment, the base 110 may receive less magnetic flux than the tooth 120. Using thicker laminations in the base 110 may provide an easier and faster base manufacturing process and may also reduce the cost of the stator segment.

Figure 4 shows a resilient element 140 arranged between the stator winding 130 and the base 110. In some examples, the resilient element 140 may be a ripple spring, although other elastic elements may also be used. The resilient element 140 may compress and absorb any radial movement of the stator winding 130 e.g. due to the thermal expansion of the stator winding 130, effectively retaining the stator winding 130 in the stator segment 100.

In some examples, the resilient element 140 may contact the stator winding 130 along at least a 70 - 85 % of the stator winding thickness.

In some examples, the resilient element 140 may be coupled to the base 110 of the stator segment 100. The resilient element 140 may be coupled to the base 110 by means of gluing. In other examples, the resilient element 140 may be coupled to the stator winding 130.

In further examples, the stator segment 100 may comprise one or more shims between the base 110 and the stator winding 130. The one or more shims may promote contact between the resilient element 140 and the stator winding 130.

In some examples (not shown), the stator segment 100 may comprise a plurality of teeth 120 mounted on a base 110. The stator segment may comprise stator windings 130 arranged around each of the teeth and resilient elements arranged between each of the stator windings 130 and the base 110.

The plurality of teeth may comprise the features discussed during the present disclosure and may be mechanically attached to the base 110 in a similar manner as the tooth 120 discussed in figures 3-5.

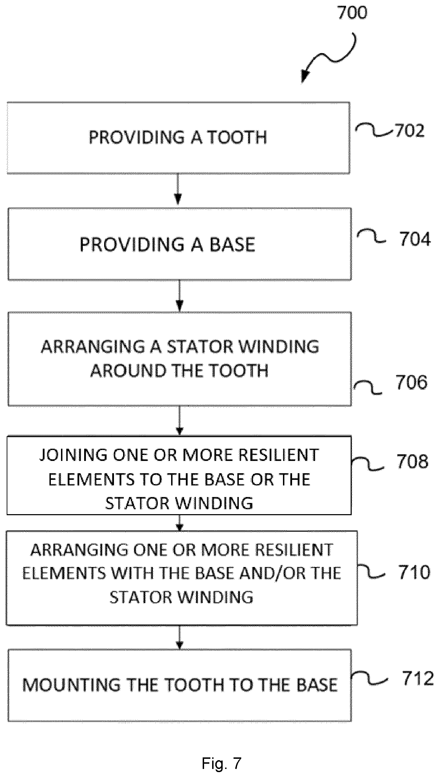

Figure 6 schematically illustrates steps according to an example of a method 700 for assembling a stator segment 100. A flowchart of the method 700 is shown in figure 7.

The method 700 comprises, at step 702, providing a tooth 120 extending between a first end 121 and a second end 122. As previously discussed in figure 4, the tooth 120 may comprise protrusions 125 at or near the second end 122 which may be used for retaining a stator winding arranged around the tooth. The protrusions may be integrally formed with the teeth.

The method further comprises, at step 704, providing a base for mounting the tooth and, at step 706, arranging a stator winding 130 around the tooth 120. The tooth may comprise a groove extending substantially in an axial direction of the tooth, and as shown in figure 6, the method may further comprise arranging an axially extending bar e.g. a T-shaped bar within the tooth.

Factors such as temperature, operating conditions or time may affect the life of the stator windings 130 arranged in the stator segment 100. Accordingly, the stator windings 130 may be submerged in a resin or varnish in a process which is called vacuum pressure impregnation (VPI). After VPI, the stator windings may comprise higher dielectric strength, greater mechanical strength, increased thermal inductivity and better protection against external substances such as fluids or gases. All these factors contribute to the obtention of a greater life span of the stator winding.

The present method may offer new manufacturing possibilities and VPI may be carried out at different stages of the assembling procedure. In some examples, the method may comprise carrying out vacuum pressure impregnation after the stator windings have been arranged around the tooth.

Step 708 of the method comprises arranging one or more resilient elements 140 with the base and/or to the stator winding. In some examples, the resilient elements may be joined to either the base or the stator winding. In one example, the resilient elements may be glued to the base.

Further, step 710 of the method for assembling the stator segment comprises joining the first end of the tooth 121 to the base 110 retaining the stator windings 130 at least partially by the one or more resilient elements 140.

The first end of the tooth 121 may be introduced into the cavity defined by the first and second inner lateral base walls 113, 115. In some examples, the width of the first end of the tooth 121 may be slightly smaller than the width of the cavity of the base, and the method may comprise introducing the first end of the tooth 121 into the cavity of the base with substantially no friction between the two parts.

In some examples, joining the first end 121 of the tooth to a first end of the base may comprise retaining the stator windings 130 between the protrusions 125 and the one or more resilient elements 140. The resilient elements 140 may be, at the same time, retained between the base 110 and the stator windings 130.

In some examples, vacuum pressure impregnation (VPI) may be done after the first end of the tooth has been joined to the base. Therefore, with the present method, flexibility during an assembly of the stator segment may be provided.

Finally, step 712 of the method comprises mounting the tooth to the base at the first end of the tooth. As schematically shown in figure 6, mechanical fasteners such as bolts may be used to mount the first end 121 of the tooth to the base 110 and therefore obtain an assembled stator segment 100.

In some examples, the method may comprise aligning a plurality of second holes in the base with a plurality of holes in the axially extending bar within the tooth and fastening mechanical fasteners through the aligned holes.

In other examples, the width of the first end of the tooth 121 may be slightly wider than the width of the cavity, and the tooth 120 and the base 110 may be attached by interference fit. The tooth 120 and the base 110 may be attached due to the friction between them, avoiding the use of additional mechanical fasteners.

In further examples, a plurality of teeth may be provided which are to be joined to the same base. In these examples, the method may comprise arranging a stator winding 130 around each of the teeth and joining and mounting the tooth to the base at the first end of the tooth.

In a further step, the method may comprise mounting the assembled stator segment 100 to a stator structure 200 e.g. a stator rim. In some examples, the stator segment 100 may be mounted to the stator structure 200 using mechanical fasteners.

In another aspect of the disclosure, a generator is provided. The generator comprises a stator and a rotor. The generator further comprises a stator rim 200 and a plurality of stator segments 100 according to any of the examples previously discussed. The stator segments 100 are mounted to the stator rim 200.

In some examples, the generator may be a direct-wind turbine generator. In other examples, the generator may be a permanent magnet generator.

It should be noted that although the disclosed examples relate to wind turbine generators, the teachings of the present disclosure may also be applied to other generators such as water generators or steam turbines and other electrical machines such as motors.

This written description uses examples to disclose the teaching, including the preferred embodiments, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A stator segment (100) for an electrical machine comprising:
a base (110) for mounting to a stator structure (200);
a tooth (120) extending between a first end (121) and a second end (122), wherein the tooth (120) is mounted on the base (110) at the first end (121);
a stator winding (130) arranged around the tooth (120); and
a resilient element (140) arranged between the stator winding (130) and the base (110).

2. The stator segment (100) of claim 1, wherein the tooth (120) comprises a first lateral wall and a second lateral wall, and wherein the first and second lateral walls comprise a protrusion (125) for retaining the stator winding (130) at or near the second end (122) of the tooth.

3. The stator segment (100) of claim 2, wherein the protrusions (125) are integrally formed with the tooth (120).

4. The stator segment (100) of any of claims 1 - 3, wherein the resilient element (140) is a ripple spring.

5. The stator segment (100) of any of claims 1-4, further comprising an axially extending bar (150) arranged within the tooth (120) and comprising a plurality of holes, and wherein the stator segment (100) is fixed to the stator structure (200) by bolts extending through the stator structure (200) and the holes in the axially extending bar (150).

6. The stator segment (100) of claim 5, wherein the axially extending bar (150) has a T-shape in an axial cross-section.

7. The stator segment (100) of any of claims 1-6, wherein the tooth (120) and the base (110) are made of electrical steel and wherein the tooth (120) and the base (110) have different grain orientations.

8. The stator segment (100) of any of claims 1-7, wherein the tooth (120) comprises a plurality of first laminations and the base (110) comprises a plurality of second laminations and wherein the plurality of first laminations is thinner than the plurality of second laminations.

9. The stator segment (100) of any of claims 1-8, wherein the stator segment (100) comprises a plurality of teeth (120) mounted to the base (110) and wherein the teeth (120) comprise stator windings (130) around each of the teeth, the stator segment (100) further comprising resilient elements (140) arranged between each of the stator windings (130) and the base (110).

10. A generator comprising a stator and a rotor and an air gap radially arranged between the stator and the rotor, wherein the stator comprises:
a stator rim (200) and
a plurality of stator segments (100) according to any of claims 1-9, wherein the stator segments (100) are mounted to the stator rim (200).

11. The generator of claim 10, wherein the generator is a direct-drive wind turbine generator.

12. The generator of claim 10, wherein the generator is a permanent magnet generator.

13. A method (700) for assembling a stator segment (100), comprising:
providing a tooth (120) extending between a first end (121) and a second end (122);
providing a base (110) for mounting of the tooth (120);
arranging a stator winding (130) around the tooth (120);
arranging one or more resilient elements (140) with the base (110) and/or to the stator winding;
joining the first end (121) of the tooth to the base (110) retaining the stator windings (130) at least partially by the one or more resilient elements (140); and
mounting the tooth to the base (110) at the first end (121) of the tooth.

14. The method (700) of claim 13, wherein the tooth (120) comprises a first lateral wall and a second lateral wall comprising a protrusion (125), and wherein joining the first end (121) of the tooth to the base (110) comprises retaining the stator windings (130) between the protrusions (125) and the one or more resilient elements (140).

15. The method (700) of claim 13 or 14, further comprising mounting the stator segment to a rim of a stator of an electrical machine.
